# EUROPEAN PATENT APPLICATION

(11) **EP 2 759 465 A1**
(43) Date of publication of application: **30.07.2014**
(21) Application number: 14151669.0
(22) Date of filing: 17.01.2014
(51) Int. Cl.: B62M 6/90

(54) **Battery assembly and human-powered vehicle having the same**

(30) Priority: 23.01.2013 JP 2013010516
(71) Applicant: DENSO CORPORATION, Kariya-city, Aichi-pref. 448-8661 (JP)
(72) Inventor: Kawachi, Hideomi, Aichi-pref., 448-8661 (JP); Jo, Yukihiro, Aichi-pref., 448-8661 (JP); Tsuchiya, Yuji, Aichi-pref., 448-8661 (JP); Satoh, Shouhei, Aichi-pref., 448-8661 (JP)
(74) Representative: Kuhnen & Wacker

(57) **Abstract**

A bicycle 1 has a battery module 21 which is mounted on a frame 4. The battery module 21 has a holder 22 and a battery unit 23. The holder 22 is joined to a down tube 16 or a head tube 12 and a seat tube 15, and is disposed to bridge the tubes. The battery unit 23 is supported by the holder 22. The battery module 21 is located above the down tube 16. Major portion of the battery module 21 is supported away from the down tube 16. The battery module 21 is supported under the top tube 17 away from the top tube 17. The battery unit 23 is arranged near the center of mass when a rider is riding on the bicycle 1. Thereby, it is possible to reduce change of impression of shape of the frame 4.

## Description

### Technical Field

The present disclosure relates to a battery assembly for human-powered vehicles, such as a bicycle, and a human-powered vehicle having the same.

### Background Art

The following patent documents disclose battery assemblies for bicycles. The disclosed units mount a battery on a frame of the bicycles. The documents disclose a battery that is directly disposed on a front side or a rear side of a seat tube. The documents also disclose a battery that is directly disposed on an upper side of a down tube or an upper side of a top tube.
Patent Document 1: JP2001-180556A
Patent Document 2: USP7934576
Patent Document 3: JP3132797U
Patent Document 4: JPH09-226653A
Patent Document 5: JPH10-109680A

### SUMMARY

One disadvantage of the conventional technology is that a position of the battery on a vehicle is restricted. In the conventional technology, the batteries are mounted directly on a portion of frame which defines a shape of the vehicle. Therefore, positions where the battery can be mounted is restricted.

Restrictions of the battery position may have bad influence on a weight distribution in the vehicle. For example, light maneuverability, which is usually required for a sports purpose vehicle, may be spoiled.

Restrictions of the battery position may have bad influence on mounting and demounting works for a battery. For example, it may become difficult to arrange a battery in a position where it is easy to handle the battery.

Restrictions of the battery position may have influence which is not desirable on an appearance. For example, a light feeling, which is expected for the appearance, may be spoiled. Since the battery is mounted to be directly touched on a frame in the conventional technology, viewers may have heavy impression. As a result, the light feeling can be reduced.

The other disadvantage of the conventional technology is a disadvantage resulting from a frame with special shape. According to the arrangement of the conventional technology, it is necessary to use a frame with a special shape which fits a shape of the battery. This may cause a low strength, or an increased weight, and even a higher price.

From such viewpoints, the battery assembly for a human-powered vehicle still needs further improvements.

It is an object of disclosure to provide a battery assembly which is capable of being mounted on an appropriate position on a vehicle.

It is an object of disclosure to provide a battery assembly which is capable of being mounted on known shapes of frames.

It is still another object of disclosure to provide a battery assembly which can be easily mounted and demounted.

The present disclosure employs the following technical means, in order to attain the above-mentioned object. The reference numbers and symbols in the claims and this section are used to show merely corresponding parts or elements in embodiments, which are described as examples, and do not intend to limit scopes of this disclosure.

According to the disclosure, a battery assembly for a human-powered vehicle is provided. The battery assembly comprises a holder (22) and a battery unit (23) supported on the holder. The holder (22) has a front connecting portion (31, 32, 37, 38) and a rear connecting portion (41, 42, 43, 44). The front connecting portion (31, 32, 37, 38) is capable of being connected with a down tube (16) or a head tube (12) of a frame (4, 204) of a human-powered vehicle (1). The rear connecting portion (41, 42, 43, 44) is capable of being connected with a seat tube (15) of the frame. The holder is capable of being bridged between the down tube (16) or the head tube (12) and the seat tube (15).

According to the battery assembly, the battery assembly can be mounted on the vehicle in a manner that the battery assembly bridges between the seat tube (15) and a tube which is one of the down tube (16) or the head tube (12). It is possible to mount the battery assembly on an appropriate position on the frame of the vehicle.

### Brief Description of Drawings

The above and other objects, features and advantages of the present disclosure will become more apparent from the following detailed description made with reference to the accompanying drawings. In the drawings:
Fig. 1 is a side view of a bicycle according to a first embodiment of the present disclosure;
Fig. 2 is a perspective view of a battery assembly for bicycle;
Fig. 3 is an exploded perspective view of the battery assembly;
Fig. 4 is a perspective view of the battery unit;
Fig. 5 is a plan view of the battery unit;
Fig. 6 is an exploded perspective view of a battery unit and a basket;
Fig. 7 is a side view of the battery unit and the basket;
Fig. 8 is a side view of the battery unit and the basket;
Fig. 9 is a side view of the battery unit and the basket;
Fig. 10 is an exploded perspective view of a dumper mechanism;
Fig 11 is a partially transparent view of components of a lock mechanism;
Fig 12 is a partial sectional view of the lock mechanism;
Fig 13 is a partial sectional view of the lock mechanism;
Fig 14 is a partial sectional view of the lock mechanism;
Fig 15 is a partial sectional view of the lock mechanism;
Fig 16 is a partial sectional view of the lock mechanism;
Fig 17 is a partial sectional view of the lock mechanism;
Fig 18 is a partial sectional view of the lock mechanism; and
Fig. 19 is a side view of a bicycle according to a second embodiment of the present disclosure.

### Description of Embodiments

A plurality of embodiments of the present disclosure are explained referring to drawings. In these embodiments, the same parts and components as those in each embodiment are indicated with the same reference numerals and the same descriptions will not be reiterated. In a case that only a part of component or part is described, other descriptions for the remaining part of component or part in the other description may be incorporated. Components and parts corresponding to the components and parts described in the preceding description may be indicated by the same reference number and may not be described redundantly.

The embodiments may be partially combined or partially exchanged in some forms which are clearly specified in the following description. In addition, it should be understood that, unless trouble arises, the embodiments may be partially combined or partially exchanged each other in some forms which are not clearly specified.

### First Embodiment

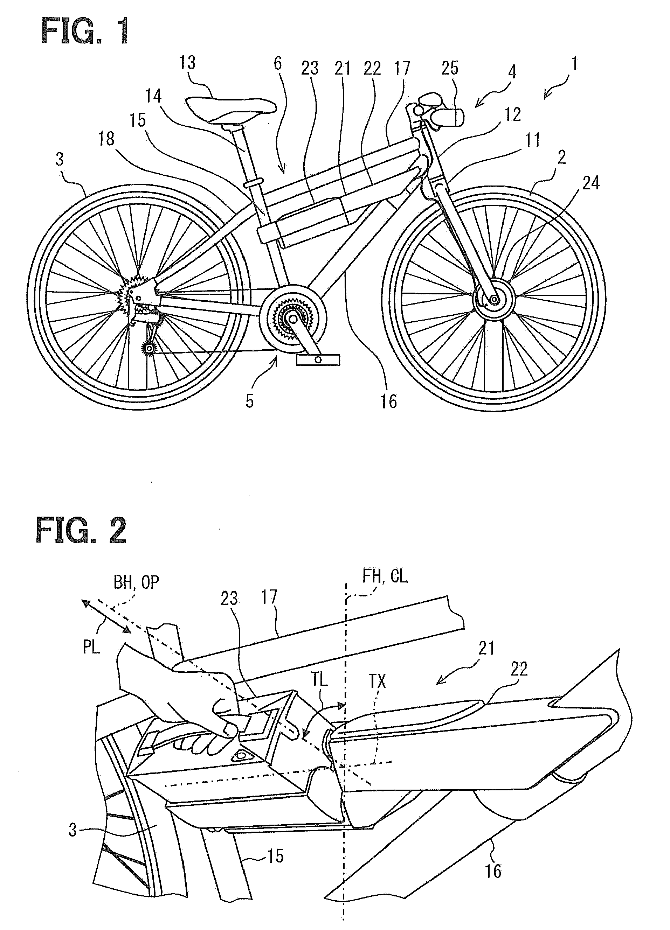

As shown in Fig. 1, a human-powered vehicle in this embodiment is a bicycle 1, which has a plurality of wheels 2 and 3. The bicycle 1 is a two-wheel vehicle, which has a front wheel 2 as a steering control wheel and a rear wheel 3 as a driving wheel. The bicycle 1 has a frame 4 made of metal or fiber reinforced resin. The bicycle 1 has a propelling mechanism 5 which drives the wheels 2 and/or 3 by human power. The propelling mechanism 5 receives an operating force from a rider, converts the operating force into a rotating force for the rear wheel 3, and transmits it to the rear wheel 3. The bicycle 1 has an electric device 6. The electric device 6 has an electric powered propelling mechanism for drives the wheels 2 and 3 by electric power. The electric powered propelling mechanism provides an assisting mechanism which assists human power, or a main power mechanism which enables motoring only by electric power. The electric device 6 also has a lighting device which emits light by electric power.

The frame 4 has a plurality of cylindrical or tubular components joined each other. The frame 4 has a fork 11 which supports the front wheel 2 being capable of steering motion. The frame 4 has a head tube 12 through which a steering tube disposed on the fork 11. The head tube 12 is one of main components of the frame 4, and is arranged on a front side of the frame 4.

The frame 4 has a seat 13 on which a rider can seat. The frame 4 has a seat post 14 for supporting the seat 13. The frame 4 has a seat tube 15 which connects a bottom bracket, which is a part of the propelling mechanism 5, and a seat post 14. The seat tube 15 is located under the seat 13, and is extending in an up and down direction. The seat tube 15 is one of main components of the frame 4, and is arranged in almost center of the frame 4. The frame 4 has a down tube 16 which connects the head tube 12 and a lower part of the seat tube 15. The down tube 16 is one of main components of the frame 4, and is arranged at a lower part of the frame 4. The frame 4 has at least the seat tube 15 and the down tube 16.

The frame 4 has a top tube 17 which connects and upper part of the head tube 12 and the seat tube 15. The top tube 17 is placed above the down tube 16, and is placed away from the down tube 16. The frame 4 has a rear triangle part 18 for supporting the rear wheel 3 behind the seat tube 15. The rear triangle part 18 has a seat stay and a chain stay.

The propelling mechanism 5 has a powering portion which is operated by a rider. The powering portion has pedals, cranks supporting the pedals, and a bottom bracket which is supported on a bottom end of the seat tube 15 for supporting the cranks in a rotatable manner. The propelling mechanism 5 has a transmitting part which transmits rotation of the powering portion to the rear wheel 3. The transmitting portion has a gear, a chain, a sprocket, and a rear derailleur (transmission), etc.

The electric device 6 has a battery module 21. The battery module 21 provides a battery assembly for a bicycle. The battery module 21 provides a battery module 21 for an electric assisted bicycle. The battery module 21 is disposed to bridge between the seat tube 15 and the down tube 16.

The battery module 21 is beginning to be prolonged almost right-angled from the seat tube 15. The battery module 21 is connected with a center part of the seat tube 15. The battery module 21 is placed ahead the remaining part of the seat tube 15 including an upper part and a lower part, and is placed away from the remaining part. The battery module 21 is connected with an upper part of the down tube 16. The battery module 21 is placed above the remaining part of the down tube 16 including a center part and a lower part, and is placed away from the remaining part.

The battery module 21 is positioned between the down tube 16 and the top tube 17. The battery module 21 is positioned below the top tube 17, and is positioned away from the top tube 17. The battery module 21 is positioned almost in parallel with the top tube 17.

The battery module 21 has a holder 22 which is disposed to bridge between the center part of the seat tube 15 and the upper part of the down tube 16. The battery module 21 has a battery unit 23 supported by the holder 22. The holder 22 has sufficient strength and rigidity for supporting the battery unit 23. The frame 4 has strength and rigidity required for the bicycle 1 by itself. Although the holder 22 improves the rigidity of the frame 4 by functioning also as a part of the frame 4, an amount of improvement is still additional.

The battery unit 23 is formed in a portable shape which can be carried by a user. The battery unit 23 is supported by the holder 22 in a manner that the battery unit 23 is engaged (mounted) and disengaged (dismounted) with the holder 22. The battery unit 23 is positioned between the seat tube 15 and the down tube 16. The battery unit 23 is positioned ahead the seat tube 15 and is positioned away from the seat tube 15. The battery unit 23 is positioned on the battery module 21 at a position slightly shifted to a rear side from the center of the battery module 21. The battery unit 23 is placed almost the center of the bicycle 1 with respect to a front-rear direction and an up-down direction. When a rider rides on the bicycle 1, the center of mass of a movable body including the rider and the bicycle 1 located above the seat 13, and is located a little ahead the seat 13. The battery unit 23 is placed almost directly below the center of mass when a rider is on the bicycle 1. The battery unit 23 is positioned near the center of mass when a rider is on the bicycle 1. This arrangement of the battery assembly provides a light feeling of operability on the bicycle 1.

The battery module 21 is formed in a long block shape which is longer along a front rear direction of the bicycle 1. The battery module 21 is connected to the down tube 16 while applying no change to the down tube 16. The battery module 21 is installed under the top tube 17 while applying no change to the top tube 17. The battery module 21 needs no special tube having specially prepared shape, such as a groove forming a concaved slot etc. The battery module 21 has a width in a right-left direction, which is thinner than a distance between knees of a rider. Thereby, it is possible to avoid collision between a knee and the battery module 21.

The electric device 6 has a rotary electric machine 24 which can works as an electric motor and/or a generator. The rotary electric machine 24 is electrically connected with the battery unit 23. The rotary electric machine 24 may function as an electric motor at least. The rotary electric machine 24 is disposed in a hub of the front wheel 2. The rotary electric machine 24 rotates by electric power supplied from the battery unit 23, and drives the front wheel 2. The rotary electric machine 24 provides an electric motoring device which runs the bicycle 1. The rotary electric machine 24 is one of loads which supplied electric power from the battery unit 23.

The rotary electric machine 24 may function as a generator. When breaking the bicycle 1, the rotary electric machine 24 functions as a generator. The electric power generated by the rotary electric machine 24 can be supplied to the battery unit 23, and can be charged.

The electric device 6 has a headlight 25 as a lighting device. The headlight 25 is electrically connected with the battery unit 23. The headlight 25 emits light by electric power supplied from the battery unit 23. The headlight 25 is one of the loads to which electric power is supplied from the battery unit 23.
Fig. 2 shows process for mounting and demounting the battery unit 23 to the holder 22. As shown in Fig. 1, in a state where the battery unit 23 is securely held in the holder 22, the battery unit 23 is positioned in a closed position CL. The closed position CL may also be referred to as a hold position. In the closed position CL, a height direction BH of the battery unit 23 and a height direction FH of the frame 4 are in agreement. The battery unit 23 is supported on the holder 22 in a manner that the battery unit 23 can tilt in a tilt direction TL. A tilt axis TX of the tilt direction TL is parallel to a longitudinal direction of the holder 22. The battery unit 23 is supported in a manner that the battery unit 23 is able to be inserted and pulled out along a push-pull direction PL with respect to the holder 22.
Fig. 2 shows the battery unit 23 which is positioned in an open position OP. When the battery unit 23 is taken out from the holder 22, the battery unit 23 is tilted in the tilt direction TL in a lateral direction of the bicycle 1 from the closed position. The battery unit 23 is pulled out obliquely upward along the push-pull direction PL. When the battery unit 23 is mounted to the holder 22, the battery unit 23 is pushed obliquely downward along the push-pull direction PL. The battery unit 23 is rotated along the tilt direction TL to the closed position CL.

The battery unit 23 is capable of being mounted and demounted with the holder 22, 222 along a direction PL which is tilted laterally with respect to the height direction FH of the frame 4. The battery unit 23 can be mounted on the holder 22 from a lateral side of the frame 4. The battery unit 23 can be removed from the holder 22 toward the lateral side of the frame 4. By supporting the battery unit 23 in a tiltable manner, it is possible to mount and dismount the battery unit 23 while avoiding the top tube 17.

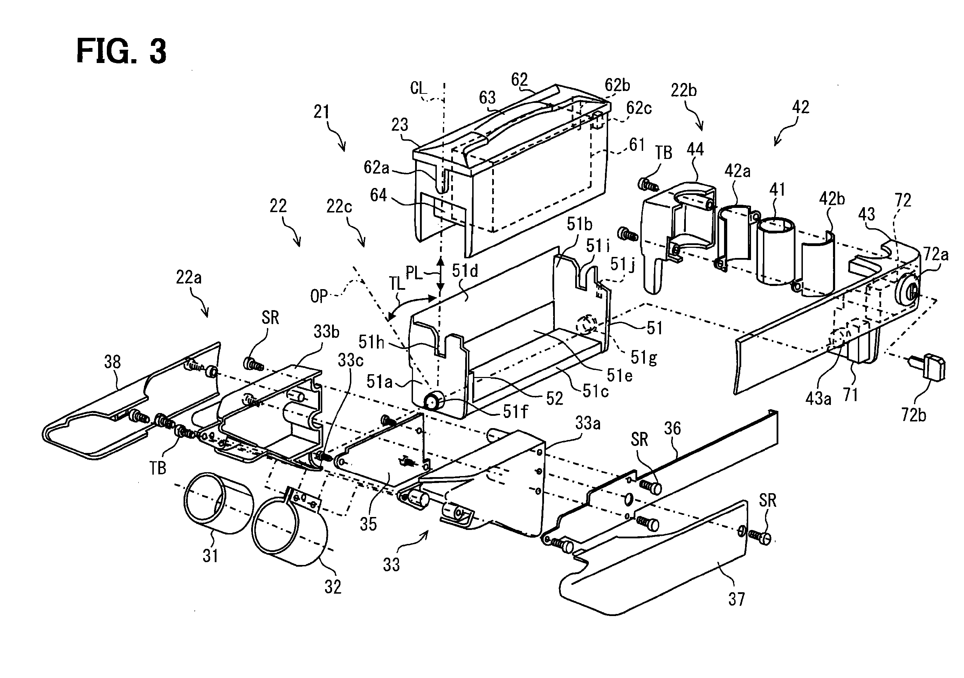

As shown in Fig. 3, the battery module 21 is formed to be able to be mounted and be dismounted to the frame 4. The battery module 21 is configured as a component which may be referred to as a bolt-on component. The battery module 21 is configured as a component which can be added to a product. For example, the battery module 21 may be added to a bicycle 1 after the bicycle 1 is once released in a market or after the bicycle 1 is once manufactured in a factory. The battery module 21 is configured as an optional component which can be attached on the frame 4 if a manufacturer or a user wants to attach it. In other words, the battery module 21 is configured so that the bicycle 1 can function even when the bicycle 1 does not have the battery module 21.

The holder 22 has a front holder 22a, a rear holder 22b and a movable holder 22c. The front holder 22a and the rear holder 22b are connected each other to provide a frame member of the holder 22. The movable holder 22c is supported by the front holder 22a and the rear holder 22b. The movable holder 22c is supported by the front holder 22a and the rear holder 22b in a tiltable manner. The movable holder 22c is capable of being tilted laterally with respect to the height direction FH of the frame 4. The movable holder 22s is capable of receiving the battery unit 23. The movable holder 22c provides a basket type battery holder. The movable holder 22c, which is tiltable, enhances the degree of freedom of directions for mounting and demounting the battery unit 23.

The front holder 22a has an elastic member 31 which can be wrapped around the down tube 16. The elastic member 31 is made of elastic material such as rubber or elastic resin. The front holder 22a has a down tube attachment 32. The down tube attachment 32 may also be referred to as a front attachment which can be connected with the tube arranged on a front side of the bicycle 1. The down tube attachment 32 is arranged at the outside of the elastic member 31, and is tightened on the down tube 16 through the elastic member 31. The down tube attachment 32 has a cross section of C shape, is tightened on the down tube 16 by a bolts TB, and is firmly fixed. The down tube attachment 32 is one of a plurality of parts which provide the frame of the holder 22.

The front holder 22a has a controller case 33 made of resin. The controller case 33 has a front left case 33a and a front right case 33b. The front left case 33a and the front right case 33b can be connected to form a container. The front left case 33a and the front right case 33b are tightened by screws SR. The controller case 33 accommodates an electric circuit 35. The electric circuit 35 controls power supply from the battery unit 23 to loads, for example, to the rotary electric machine 24.

The electric circuit 35 provides a controller for an electric assist system which controls output torque of the rotary electric machine 24 according to operating force applied by a rider. The controller case 33 is fixed to the down tube attachment 32. The controller case 33 has a bearing 33c which supports the movable holder 22c in a tiltable manner. The controller case 33 is one of a plurality of parts which provide the frame of the holder 22.

The front holder 22a has a back plate 36 made of metal, which connects the front holder 22a and the rear holder 22b. The back plate 36 is fixed to the front left case 33a by the screws SR. The back plate 36 is fixed also to the rear holder 22b. The back plate 36 is one of a plurality of parts which provides the frame of the holder 22.

The front holder 22a has a front left cover 37, which is made of resin and provides an outer wall. The front left cover 37 covers a front part of the front left case 33a and the back plate 36. The front left cover 37 covers a left side of an upper half of the down tube attachment 32. The front left cover 37 is fixed to the front left case 33a by the screws SR.

The front holder 22a has a front right cover 38, which is made of resin and provides an outer wall. The front right cover 38 covers the front right case 33b. The front right cover 38 covers a right side of an upper half of the down tube attachment 32. The front right cover 38 is fixed to the front right case 33b by the screws SR. The front left cover 37 and the front right cover 38 are arranged to place the down tube 16 between them and to cover from a right side and a left side.

The rear holder 22b has an elastic member 41 which can be wrapped around the seat tube 15. The elastic member 41 is made of elastic material such as rubber or elastic resin. The rear holder 22b has a seat tube attachment 42. The seat tube attachment 42 may also be referred to as a rear attachment which can be connected with the tube arranged on a center of the bicycle 1. The seat tube attachment 42 is arranged at the outside of the elastic member 31, and is tightened on the seat tube 15 through the elastic member 31. The seat tube attachment 42 has a pair of half cylindrical members 42a and 42b. The half cylindrical members 42a and 42b are tightened on the seat tube 15 by the bolts TB, and are firmly fixed. The seat tube attachment 42 is one of a plurality of parts which provide the frame of the holder 22.

The rear holder 22b has a rear left cover 43 which is made of resin and provides an outer wall. The rear left cover 43 covers a rear part of the back plate 36. The rear left cover 43 covers a left side of the seat tube attachment 42. The rear left cover 43 has a bearing 43a which supports the movable holder 22c in a tiltable manner.

The rear left cover 43 connected to the back plate 36. In order to adapt a plurality of sizes of the frame 4, e.g., variations of length of the top tube 17 or the down tube 16, the rear left cover 43, the front left cover 37, and the front right cover 38 are provided as interchangeable parts which have different length. For this purpose, a few kinds of covers 43, 37, 38, which are connected each other along a longitudinal direction of the battery module 21, are provided. By providing a few kinds, it is possible to provide a plurality of variations of the battery modules 21, which have different length, without changing other parts. It is possible to provide the holder 22 which can suit several different frames. The rear left cover 43 and the back plate 36 may be firmly fixed by fixing means, such as an adhesive, a screw-fastening, and an insert molding. The rear left cover 43 is one of a plurality of parts which provide the frame of the holder 22.

The rear holder 22b has a rear right cover 44 which is made of resin and provides an outer wall. The rear right cover 44 covers a right side of the seat tube attachment 42. The rear left cover 43 and the rear right cover 44 are tightened and fixed on the seat tube attachment 42 by the bolts TB. The rear left cover 43 and the rear right cover 44 are arranged to place the seat tube 15 between them and to cover from a right side and a left side.

The movable holder 22c has a basket 51 made of resin. The basket 51 is a box shaped part having at least one opening on a top side. The basket 51 is about a rectangular box shape. The basket 51 is capable of receiving the battery unit 23. The basket 51 is supported by the front holder 22a and the rear holder 22b in a tiltable manner.

The basket 51 has end walls 51a and 51b positioned on a front side and a rear side of the battery module 21. The basket 51 has a bottom wall 51c which connects the end walls 51a and 51b. The basket 51 has a side wall 51d on a right side of the battery module 21. In other words, the side wall 51d is positioned on a side toward which the basket 51 is pulled out to mount and demount the battery unit 23. The side wall 51 is provided only on an upper part of the basket 51. As a result, the opening 51e is formed between the side wall 51d and the bottom wall 51c. The opening 51e opens above the bottom wall 51c. The opening opens toward lateral direction from the bottom of the basket 51.

The movable holder 22c is a basket 51 which has the bottom wall 51c and the side wall 51d which define the opening 51e among them. The basket 51 holds the battery unit 23 with respect to four sides by the walls 51a, 51b, 51c, and 51d. When the basket 51 is closed and positioned in the closed position CL, the battery unit 23 is held with respect to five directions. Foreign substances entered in the basket 51 can be discharged through the opening 51e.

Shafts 51f and 51g for supporting the basket 51 in a tiltable manner are formed on the end walls 51a and 51b, respectively. The shaft 51f is supported by the bearing 33c in a rotatable manner. The shaft 51g is supported by the bearing 43a in a rotatable manner. A range of the tilting movement is restricted by interference between the basket 51 and the back plate 36. As a result, the basket 51 is supported in a tiltable manner between the closed position CL at which the opening is directed in an upside and the open position OP at which the opening is tilted toward a right side of the battery module 21. The bearings 33c and 43a and the shafts 51f and 51g provide a tiltable support mechanism which supports the movable holder 22c in a manner that the movable holder 22c is tiltable with respect to the front holder 22a and the rear holder 22b.

Guide grooves 51h and 51i, which are associated with guide projections 62a and 62b formed on the battery unit 23, are formed on an upper part of the end walls 51a and 51b, respectively. The guide grooves 51h and 51i restricts a pushing direction and a pulling direction of the battery unit 23 by guiding the battery unit 23. The guide grooves 51h and 51i are provided by slits penetrating the end walls 51a and 51b. Each of the guide grooves 51h and 51i has converging slant surfaces located on an upper part and vertical parallel surfaces located on a lower part. The converging slant surfaces are provided by a pair of slant surfaces sloping so that width of the slant surfaces becomes narrow gradually as it goes downward from a top. The vertical parallel surfaces are provided by a pair of flat surfaces extending along an up-down direction from a lower end of the converging surfaces, i.e., along a proper push-pull direction PL of the battery unit 23. The guide grooves 51h and 51i and the guide projections 62a and 62b provide a guide mechanism which guides movement of the battery unit 23.

A holding groove 51j, which is associated with a later explained lock mechanism 72, is formed on the rear end wall 51b. The holding groove 51j provides a receptacle seat which meshes with a latch bolt provided in the lock mechanism 72. The lock mechanism 72 and the holding groove 51j provide a basket latch mechanism which holds the basket 51 in the closed position CL. In the closed position CL, the basket latch mechanism provides holding force which prevents that the basket 51 moves freely by vibration etc. The basket latch mechanism permits that a user operates the basket 51 by hand with respect to both a direction in which the basket 51 leaves from the closed position CL and a direction in which the basket 51 approaches to the closed position CL. In order to provide the latching function in such both directions, the holding groove 51j has a slant surface sloping in both ways in the tilt direction TL. Therefore, a user can manually operate and tilt the basket 51 to the closed position CL. In addition, a user can manually operate and tilt the basket 51 from the closed position CL. The basket latch mechanism may also be referred to as a bidirectional latch mechanism for the movable holder 22c, i.e., the basket, 51.

The movable holder 22c has a connector 52 which is fixed on an inside of the basket 51. The connector 52 is an electric connector for connecting the battery unit 23 and the electric circuit 35. The connector 52 provides a male connector which has projected electrodes. The connector 52 is arranged adjacent to the front end wall 51a close to the electric circuit 35. The connector 52 makes a pair of connector with a later mentioned connector 64 disposed on the battery unit 23. The connector 52 can be coupled with the connector 64 only in the push-pull direction PL.

The battery unit 23 has a battery pack 6, such as a lithium ion battery, and a battery case 62, which is formed in a box shape where the battery pack 61 is accommodated. The battery case 62 is formed in a shape which is capable of being inserted into the basket 51 from an upper side and is capable of being pulled out from the basket 51.

Guide projections 62a and 62b, which are associated with the guide grooves 51h and 51i, are formed on the battery case 62. The guide projections 62a and 62b can be inserted into the guide grooves 51h and 51i.

A lock groove 62c, which is associated with a later explained lock mechanism 72, is formed on the battery case 62. The lock groove 62c provides a receptacle seat which meshes with the latch bolt disposed on the lock mechanism 72. The lock mechanism 72 and the lock groove 62c provide a battery latch mechanism which holds the battery unit 23 in the closed position CL. The battery latch mechanism permits that a user manually operates the basket 51 and the battery unit 23 in the direction toward the closed position CL. The battery latch mechanism prevents that a user manually operates the basket 51 and the battery unit 23 in the direction leaving from the closed position CL. In order to give the latching function in a one-way manner, the lock groove 62c has a slant surface which inclined in one way of the tilt direction TL. Therefore, a user can manually operate and tilt the basket 51 and the battery unit 23 toward the closed position CL. The user is required to perform an unlocking operation of the lock mechanism 72 in order to manually operate and tilt the basket 51 and the battery unit 23 from the closed position CL. The battery latch mechanism may also be referred to as a one-way latch mechanism for the movable holder 22c and the battery unit 23.

The battery unit 23 has a handle 63 for a user to grip. The handle 63 is disposed on a top of the battery case 62.

The battery unit 23 has a connector 64. The connector 64 is an electric connector for connecting the battery unit 23 and the electric circuit 35. The connector 64 provides a female connector which has a receptacle to receive electrodes. The connector 64 makes a pair with the connector 52. The connector 64 can be coupled with the connector 52 only along the push-pull direction PL.

Main components for a dumper mechanism 71, which is associated with the movable holder 22c, are disposed on the rear left cover 43. The damper mechanism 71 consists of a component prepared in the movable holder 22c, and a component prepared in the rear left cover 43.

Main components of the lock mechanism 72 associated with the movable holder 22c and the battery unit 23 are disposed on the rear left cover 43. The lock mechanism 72 is provided by the holding groove 51j formed on the movable holder 22c and the lock groove 62c formed on the battery unit 23. The lock mechanism 72 is provided by a key cylinder 72a and a key 72b. If the key cylinder 72a is operated by the key 72b to lock, the lock mechanism 72 prevents that the battery unit 23 is operated and tilted from the closed position CL. If the key cylinder 72a is operated by the key 72b, to unlock, the lock mechanism 72 permits that the battery unit 23 is operated and tilted from the closed position CL.

The battery module 21 has the holder 22 which can be mounted on the frame 4 in a manner that the holder 22 bridges between the down tube 16 and the seat tube 15 by using a front connecting portion and a rear connecting portion. The holder 22 has the front connecting portion which can be connected with the down tube 16 in the frame 4 of the bicycle 1 and the rear connecting portion which can be connected with the seat tube 15 in the frame 4 of the bicycle 1. The battery module 21 has the battery unit 23 which is supported on the holder 22. According to the configuration, a battery assembly for a bicycle 1 having the holder 22 for supporting the battery unit 23 is provided. The battery assembly, i.e., the battery module 21, is capable of being disposed to bridge between the seat tube 15 and the down tube 16. Therefore, the battery unit 23 can be arranged in a desirable position in the frame 4 of the bicycle 1.

The front connecting portion may be provided by the elastic member 31, the down tube attachment 32, the front left cover 37, and the front right cover 38. The rear connecting portion may be provided by the elastic member 41, the seat tube attachment 42, the rear left cover 43, and the rear right cover 44. The front connecting portion has at least the down tube attachment 32, i.e., the front attachment 32, which is capable of being wrapped on the down tube 16. The rear connecting portion has at least the seat tube attachment 42, i.e., the rear attachment 42, which is capable of being wrapped on the seat tube 15. According to this configuration, it is possible to connect the holder 22 on the frame 4 without using additional portion like holes or tab-shaped projections on the frame 4.

The holder 22 and the frame 4 are connected through only the front connecting portion and the rear connecting portion. The front connecting portion is capable of being connected with an upper part of the down tube 16. The rear connecting portion is capable of being connected with a center part of the seat tube 15. The battery unit 23 has a long block shape having a longitudinal direction along and extending between the front connecting portion and the rear connecting portion. The holder 22 and the battery unit 23 are capable of being disposed under the top tube 17 and being disposed away from the top tube 17 of the frame 4. This arrangement makes it possible to reduce change of impression on a shape of the frame 4.

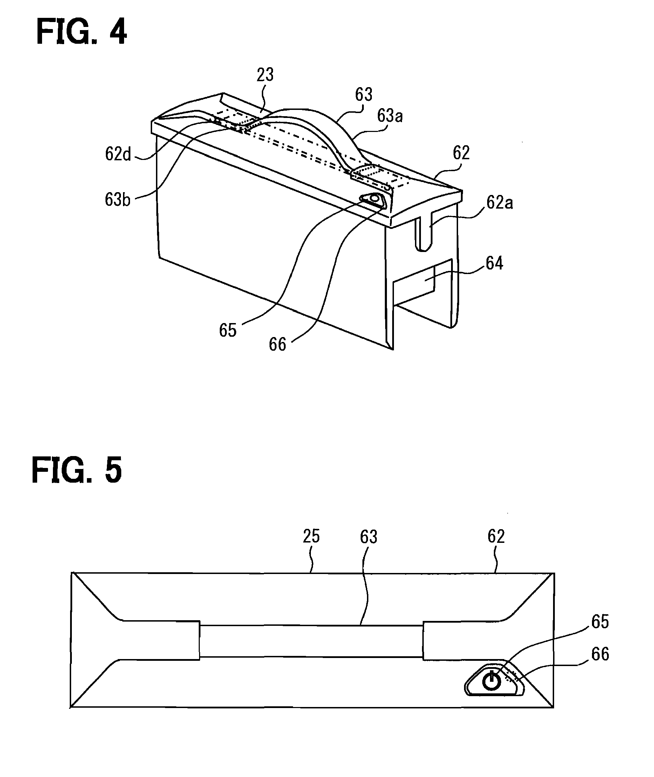

As shown in Fig. 4, the battery unit 23 has a handle 63 disposed on a top of the battery unit 23. The handle 63 is adjustable in a height from the top. The handle 63 is movable between a pulled position shown by a solid line and an assembled position shown by a dashed line. The handle 63 has a band 63a made of resin and pins 63b disposed on ends of the band 63a. The battery case 62 has guide slots 62d which guide the end of the band 63a and the pins 63b in a slidable manner. The pins 63b can move only in the guide slots 62d.

In a case that the battery unit 23 is assembled in the basket 51 and is located in the closed position CL, the band 63a can be pushed and placed on the top of the battery case 62. Therefore, the handle 63 can be an integral parts with the top of the battery case 62. Since the handle 63 is adjustable in the height, it is possible to make it small by reducing the height. It is possible to avoid interference between the handle 63 and the top tube 17. On the other hand, by pulling the handle 63 in the height direction, it is possible to make the handle 63 in a form easy to hold. By pulling the band 63 out, the user can hold the band 63a to operate the battery unit 23. The user can hold the battery unit 23 easily.

A switch 65 and an indicator 66 are arranged on the battery case 62. The switch 65 may be used to select ON and OFF of the electric device 6. The switch 65 may be used as an instruction switch for displaying remaining electric energy in the battery pack 61. The indicator 66 may be used to display operation states, e.g., ON or OFF, of the electric device 6, and to display remaining electric energy.

As shown in Fig. 5, the switch 65 and the indicator 66 are arranged on the top of the battery unit 23. The switch 65 and the indicator 66 are arranged on an area near the side of the battery unit 23. The switch 65 and the indicator 66 are arranged on a corner of the battery unit 23. The switch 65 and the indicator 66 are arranged on a place which is not hidden by the basket 51 and is not placed just under the top tube 17. The battery unit 23 has the switch 65 and the indicator 66 which are arranged on a side area of the top. It is possible to arrange the switch 65 and the indicator 66 on a place easy to operate and easy to look.

The switch 65 is a push type switch. The indicator 66 is arranged to surround the switch 65. The indicator 66 can be provided by an annular light guide member and a light emitting diode (LED). The LED can emit multicolor, such as green, orange, and red. For example, the remaining electric energy in the battery pack 61 can be displayed by color and lighting state of the LED. For example, the LED may be controlled to change lighting status, from green, orange, red, and blinking red as the remaining electric energy decreases.

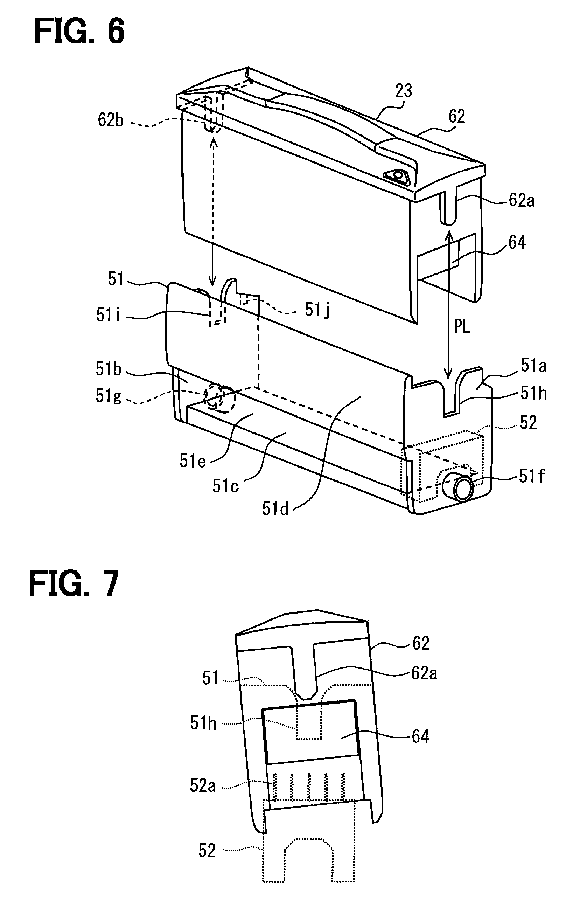

As show in Fig. 6, the battery unit 23 pushed into the basket 51 from an opening formed on an upper side of the basket 51. In the process in which the battery unit 23 is pushed into the basket 51, the guide projections 62a and 62b are put into the guide grooves 51h and 51i.

Figs. 7-9 show the process in which the battery unit 23 is inserted into the basket 51. The battery unit 23 is illustrated by solid lines. The basket 51 is illustrated by broken lines.

Fig. 7 shows an initial stage. When tips on the guide projections 62a and 62b contact the converging slant surfaces of the guide grooves 51h and 51i, the guide projections 62a and 62b are guided along the guide grooves 51h and 51i. The battery unit 23 is guided to the center of the basket 51.

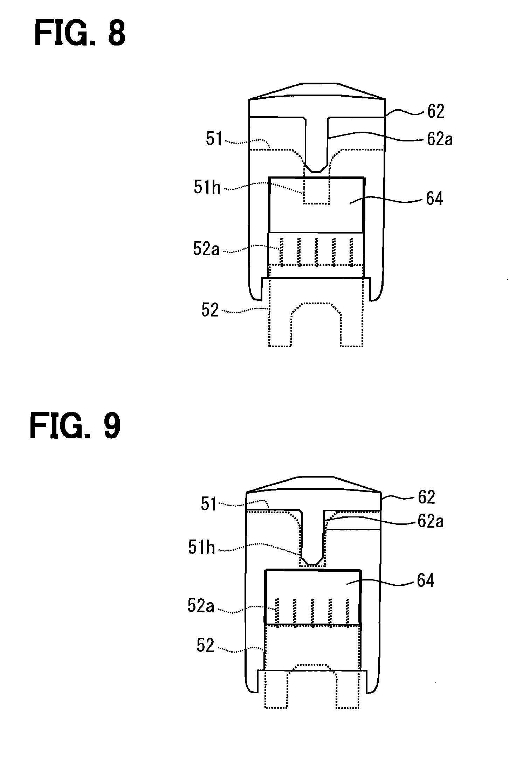

Fig. 8 shows an interim phase. When the guide projections 62a and 62b reach to the parallel surfaces of the guide grooves 51h and 51i, a height direction of the battery unit 23 and a height direction of the basket 51 are aligned on a single line. Alignment of the height directions is attained before the connector 52 and the connector 64 come in contact with each other. The guide projections 62a and 62b and the guide grooves 51h and 51i locate the battery unit 23 and the basket 51 along the connecting direction of the connectors 52 and 64 before the connectors 52 and 64 contact each other. When the connectors 52 and 64 come in contact with each other, positional shift between the connectors 52 and 64 are adjusted and limited within a gap between the guide projections 62a and 62b and the guide grooves 51h, and 51i. Therefore, it is possible to reduce deformation of the connectors 52 and 64.

Fig. 9 shows a final stage in which the battery unit 23 is completely assembled with the basket 51. The user can connect the pair of connectors 52 and 64, without making deformation on the electrode 52a, when assembling and sliding the battery unit 23, which is heavy, into the basket 51. As shown in drawings, the movable holder 22c and the battery unit 23 have a pair of electric connectors 52 and 64 connectable each other, respectively. The battery unit 23 and the movable holder 22c have a guide mechanism 51h, 51i, 62a, 62b which guides relative movement of the battery unit 23 and the movable holder 22c along a connection direction PL of the connectors 52, 64. Therefore, it is possible to couple and decouple the connectors 52 and 64 by just operating and moving the battery unit 23 with respect to the movable holder 22c.

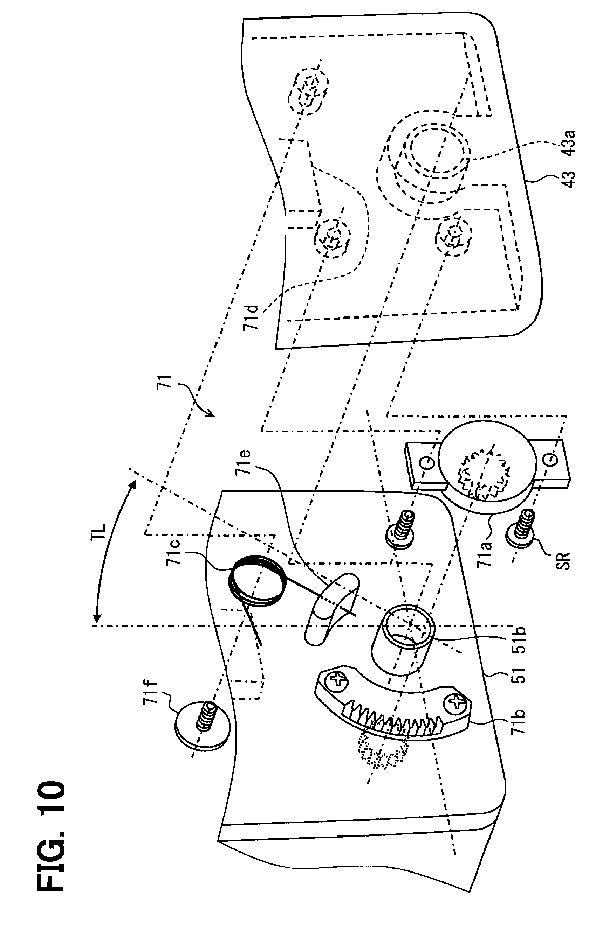

As shown in Fig. 10, the holder 22 has a dumper mechanism 71 which controls a tilting speed of the movable holder 22c. Components of the damper mechanism 71 are distributed on the rear left cover 43 and the basket 51. A rotary dumper 71a, which is an oil pressure type or a friction type, is fixed to the rear left cover 43 with screws SR. A rack gear 71b which can be meshed with the pinion gear on the rotary damper 71a is fixed to the basket 51 with screws. The rotary damper 71a gives predetermined resistance to rotation of the pinion. As a result, damper action is given to tilting motion of the basket 51. As a result, a tilting speed can be controlled.

The holder 22 has a bias member 71c which urges and pushes the movable holder 22c, i.e., the basket 51, toward a tilted position in which the movable holder 22c, i.e., the basket 51, is tilted with respect to the height direction FH of the frame 4. The bias member 71c is arranged as a part of the damper mechanism 71. The bias member 71c urges the basket 51 in a direction toward the open position OP. The bias member 71c can be provided by a torsion spring. The bias member 71c is hooked on both a fixed seat 71d formed on the rear left cover 43 and a movable seat 71e formed on the basket 51. The bias member 71c is supported on the rear left cover 43 by a holder screw 71f.

If the basket 51 is released from a latch state by a latch mechanism, the basket 51 moves to the open position OP automatically. The movable holder 22c, i.e., the basket 51, can be held in a tilted position. When putting the battery unit 23 into the basket 51, the opening of the basket 51 is tilted in a direction where the opening is not covered with the top tube 17.

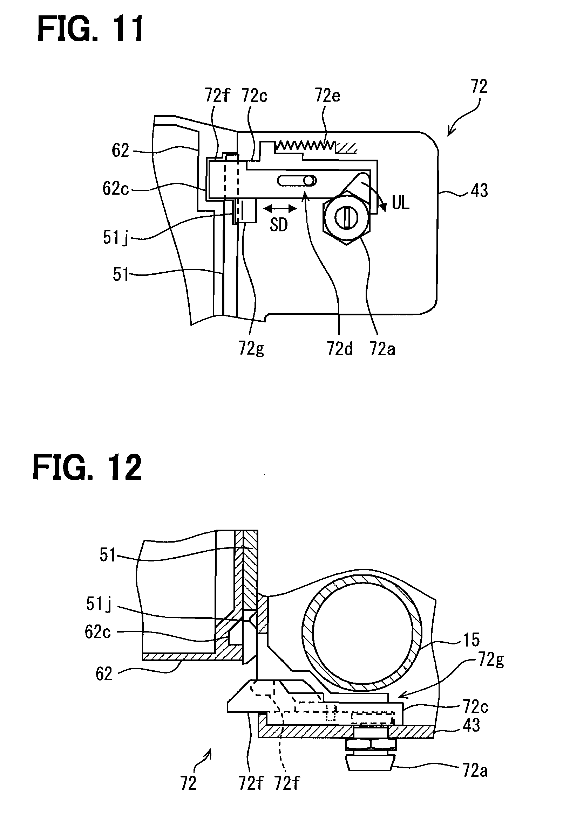

As shown in Fig. 11, components of the lock mechanism 72 are arranged on the rear left cover 43, the basket 51, and the battery case 62 in a distributed manner. The components are illustrated in a partially transparent perspective manner.

The lock mechanism 72 has a key cylinder 72a. The key cylinder 72a can be rotated in an unlocking direction UL when a proper key 72b is inserted.

The lock mechanism 72 has a bolt 72c which is movably supported in the rear left cover 43. The bolt 72c is supported by a guide mechanism 72d disposed on the rear left cover 43 so that the bolt 72c can move only in a slide direction SD. The guide mechanism 72d can be provided by a pin inserted in both a slit formed on the bolt 72c and a slit formed on the rear left cover 43.

The lock mechanism 72 has a bias member 72e which urges and pushes the bolt 72c in a projecting direction, i.e., a locking direction. The bolt 72c is urged toward a mesh position illustrated. The bias member 72e can be provided by a helical compression spring. The bias member 72e is arranged between the bolt 72c and the rear left cover 43.

The bolt 72c has a first latch 72f which can mesh with a lock groove 62c formed on the battery case 62. The first latch 72f meshes with the lock groove 62c, when the battery case 62 is in the closed position. The first latch 72f has a slant surface sloping to the tilt direction TL, and a vertical surface vertical to the tilt direction TL. When the battery case 62 is operated toward the closed position CL, the bolt 72c is pushed by contacting the battery case 62. Therefore, the slant surface on the first latch 72f enables the battery case 62 reaches to the closed position CL. In the illustrated embodiment, a notch for avoiding contact with the first latch 72f is formed on the basket 51. The vertical surface on the first latch 72f prevents that the battery case 62 is tilted from the closed position CL. The first latch 72f provides a battery latch mechanism.

The holder 22 has the battery latch mechanism which holds the battery unit 23 in the closed position CL. The battery latch mechanism is provided by the lock groove 62c and the first latch 72f. The battery latching mechanism permits operation of the battery unit 23 to the closed position CL by a user, and prevents operation of the battery unit 23 from the closed position CL by a user. By this configuration, removal of the battery unit 23 which is not desirable can be prevented. The holder 22 has a lock mechanism (72) which permits operation of the battery unit (23) from the closed position by a user by unlocking operation. The lock mechanism 72 cancels the open prevention function from the closed position CL by the battery latching mechanism. It is possible to permit removal of the battery unit 23 by unlocking operation.

The bolt member 72c has a second latch 72g which can be meshed with a holding groove 51j formed on the basket 51. The second latch 72g meshes with the holding groove 51j, when the battery case 62 is in the closed position CL. The second latch 72g has two slant surfaces sloping in an opposite direction to the tilt direction TL. When the basket 51 alone is operated toward the closed position CL, or the basket 51 and the battery case 62 are operated toward the closed position CL, the bolt 72c is pushed by contacting the basket 51. Therefore, one of the slant surfaces on the second latch 72g enables the basket 51 reaches to the closed position CL. The second latch 72g is arranged to come in contact with the basket 51, but is arranged not to come in contact with the battery case 62. The other one of the slant surfaces on the second latch 72g permits that the basket 51 is tilted from the closed position. The second latch 72g provides a basket latching mechanism. The basket latching mechanism may be referred to as a movable holder latching mechanism.

The holder 22 has a movable holder latching mechanism which latches the movable holder 22c in the closed position CL. The movable holder latching mechanism is provided by a holding groove 51j and a second latch 72g. The movable holder latching mechanism permits both operation of the movable holder 22c to the closed position CL by a user and operation of the movable holder 22c from the closed position CL by a user. It is possible to hold the movable holder 22c at the closed position CL. In addition, a user can manually operate the movable holder 22c in both a catch operation and a release operation. In the catch operation, the movable holder 22c is operated to move toward the closed position CL. In the release operation, the movable holder 22c is operated to move from the closed position CL.

Both the first latch 72f and the second latch 72g are formed on the bolt 72c. In other words, the bolt 72c of the lock mechanism 72 has both the projection for the battery latch mechanism and the projection for the movable holder latch mechanism. One of the projections, i.e., the first latch 72f, is capable of being meshed with the lock groove 62c formed on the side surface of the battery unit 23. The other one of the projections, i.e., the second latch 51j, is capable of being meshed with the holding groove 51j formed on the side surface of the basket 51. The projection 72f is formed in a shape having a single slant surface. The projection 72f is capable of being restricted a tilting movement of the battery unit 23 from the closed position CL by a vertical surface opposite to the slant surface. The projection 72g may be formed in a shape having a double slant surfaces or a round surface. As a result, when the basket 51 is operated in the tilt direction, it is possible to apply force in a direction in which the bolt 72c is pushed toward a retracted position. This simple configuration can provide both of the basket latch mechanism for holding the basket 51 and the battery latch mechanism for holding the battery unit 23.

The first latch 72f and the second latch 72g move the same amount and in a synchronized manner. An amount of engagement, i.e., an amount of mesh, between the first latch 72f and the lock groove 62c in the right-left direction on the drawing is larger than an amount of engagement between the second latch 72g and the holding groove 51j. Therefore, as the bolt 72c moves rightward from the state illustrated, first, an engagement between the second latch 72g and the holding groove 51j is released, and then, an engagement between the first latch 72f and the lock groove 62c is released.

The bolt 72c can move rightward against the bias member 72e from the lock position illustrated. The bolt 72c may be moved in the right, i.e., the acceptance direction, by a contact between the first latch 72f and the battery case 62. The bolt 72c may be moved in the right, i.e., the acceptance direction, by a contact between the second latch 72g and the basket 51. Furthermore, when the key cylinder 72a is operated by the key 72b, the bolt 72c may be moved in the right, i.e., the acceptance direction, by the key cylinder 72a.

Figs. 12-16 show the process in which the battery unit 23 and the basket 51 are tilted toward the closed position CL while accommodating the battery unit 23 in the basket 51.

As shown in Fig. 12, when the battery unit 23 and the basket 51 are in the open position, the bolt 72c is fully pushed out by the bias member 72e and is in a fully protruded position.

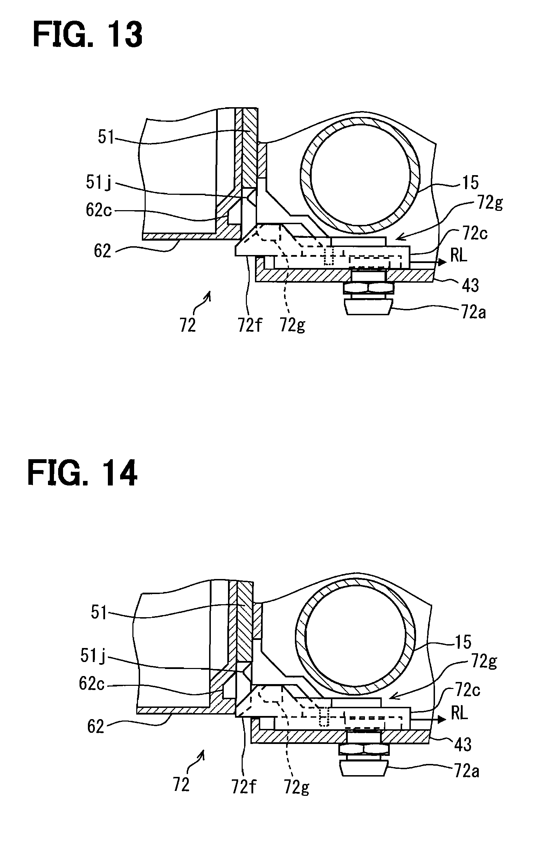

As shown in Fig. 13, when the basket 51 comes in contact with the second latch 72g, the bolt 72c slightly moves in a retracting direction RL.

As shown in Fig. 14, when the battery case 62 contacts the first latch 72f, the bolt 72c further moves greatly in the retracting direction RL. Thereby, the battery unit 23 and the basket 51 are tilted towards the closed position CL. Then, when the battery unit 23 and the basket 51 reach to the closed position CL, the latches 72f and 72g mesh with the grooves 62c and 51j.

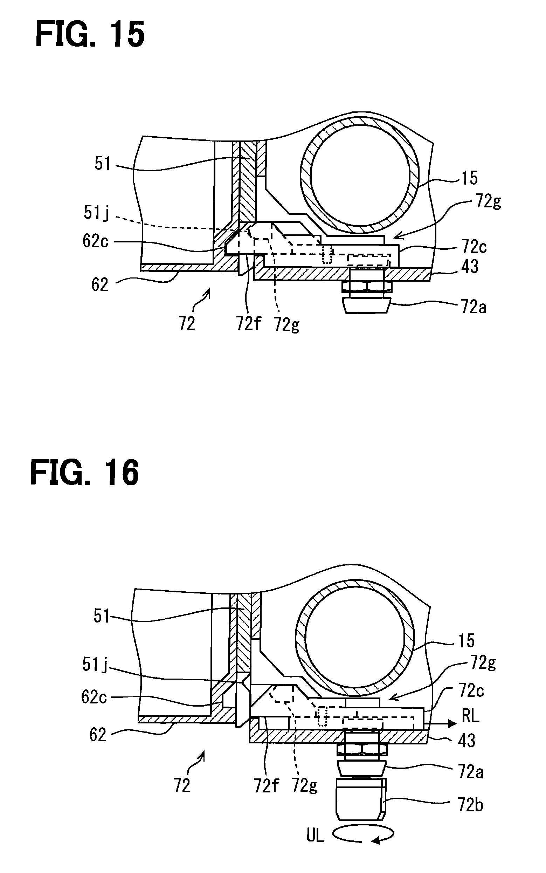

Fig. 15 shows a state where both the battery case 62 and the basket 51 are held at the closed position. The first latch 72f meshes with the lock groove 62c. The second latch 72g meshes with the holding groove 51j. The battery unit 23 and the movable holder 22c can be restrained in the closed position.
Fig. 16 shows a state in which the bolt 72c is operated in an unlock position, i.e., in a fully retracted position, by an unlocking operation performed on the key cylinder 72a by using the key 72b. When engagement between the second latch 72g and the holding groove 51j is released by a rightward movement of the bolt 72c, the basket 51 becomes tiltable from the closed position CL. When engagement between the first latch 72f and the lock groove 62c is released by further rightward movement of the bolt 72c, the basket 51 and the battery case 62 becomes tiltable from the closed position CL.

If the basket 51 is operated to be tilted to the closed position CL after pushing the battery unit 23 into the basket 51, the first latch 72f is inserted into the lock groove 62c on the side surface of the battery case 62. As a result, the battery unit 23 and the basket 51 can be held to the closed position CL. The first latch 72f is the projection with the single slant surface. Therefore, when closing the basket 51, the bolt 72c can be pushed by the slant surface. Contrary, when opening the battery unit 23 and the basket 51, it is necessary to rotate the key cylinder 72a by the key 72b, and to retract the bolt 72c by the key cylinder 72a.

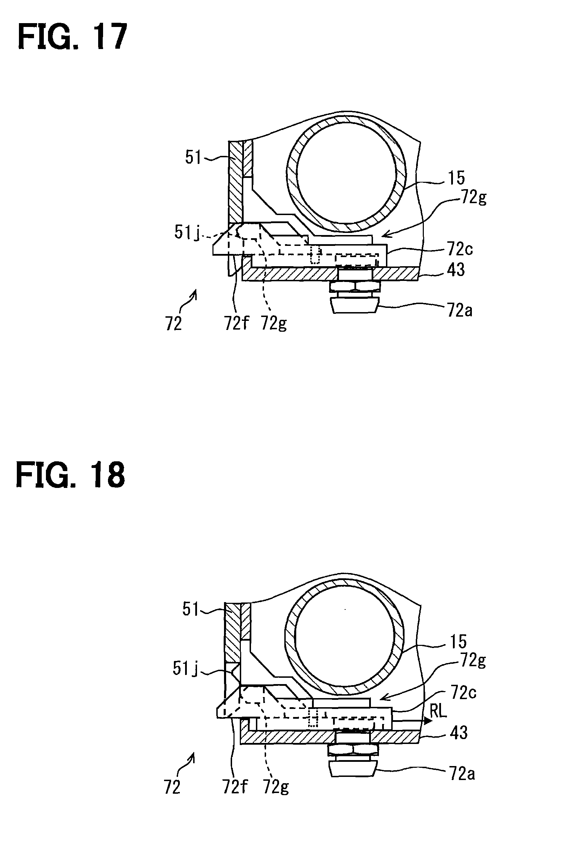

Fig. 17 shows a state where the basket 51 alone is held in the closed position CL. The first latch 72f does not interfere with the basket 51. The second latch 72g is meshed with the holding groove 51j. The movable holder 22 can be held at the closed position CL. However, the holding groove 51j and the second latch 72g give holding force which is set at rather weak level which can be released from the closed position CL by manually operating force applied by a user. Therefore, if a user manually operates the basket 51 in the tilting direction, the bolt 72c can be pushed rightward in the drawing by the slant surface of the holding groove 51j and the slant surface of the second latch 72g. As a result, the hold condition of the basket latch mechanism can be released easily.
Fig. 18 shows a state where a holding condition of the basket 51 is released. The second latch 72g moves the bolt 72c rightward by contacting the basket 51, and permits the tilting movement of the basket 51. Therefore, in the state where the battery unit 23 is removed from the basket 51, the basket 51 alone can be held at the closed position CL. In addition, in this state, a user can manually operate to tilt the basket 51 from the closed position CL without operating the key cylinder 72a.

The lock mechanism 72 can hold the basket 51 at the closed position CL when the battery unit 23 is mounted in the basket 51, and when the battery unit 23 is demounted from the basket 51.

The battery module 21 is disposed between the down tube 16 and the top tube 17 while defining a gap with the down tube 16 and a gap with the top tube 17. In a sports purpose bicycle, design of the frame 4, i.e., a shape, a color, and a size, is an important aspect of product appeal. According to this embodiment, it is possible to mount the battery unit 23 while reducing change of the impression of the appearance of the frame 4. For example, the battery module 21 can be mounted without spoiling the light feeling of the frame 4 greatly.

The battery unit 23 can be placed almost directly below the center of mass when a rider is on the bicycle 1. The battery unit 23 can be placed close to the center of mass when a rider is on the bicycle 1. Such arrangement of the battery unit 23 enables improvement in maneuverability. Therefore, it is suitable for the sports bicycle with which a high performance is required.

The battery unit 23 is mounted on the frame 4 without using a special frame which is adapted to a shape of the battery unit 23. It is possible to mount the battery unit 23 while keeping a basic form of the frame 4 which is necessary to provide the basic function of the bicycle 1. Therefore, it is possible to reduce faults of the frame 4, such as strength reduction, a weight increase, and a price increase.

The battery unit 23 is positioned within a space defined by the frame 4 in the closed position CL. It is possible to avoid excessive projection from the space defined by the frame 4. The battery unit 23 is supported in a tiltable manner in a lateral direction from the space defined by the frame 4. It is possible to perform mounting and demounting works of the battery unit 23 easily.

The battery module 21 is joined, i.e., fixed and mounted, to the frame 4 by the attachments 32 and 42, which are wrapped around the tubes 15 and 16. Therefore, it is not necessary to form either holes or projected brackets on the frame 4. It is possible to mount the battery module 21 on the frame 4 while changing the frame 4 on which no special design is applied to mount electric devices.

The elastic members 31 and 41 fills gaps between the tubes 15 and 16 and the attachments 32 and 42. The attachments 32 and 42 are designed and manufactured to be commonly used on several tubes having different diameter. Therefore, the attachments 32 and 42 can be used for a plurality of frame 4 with the tubes 15 and 16 in different diameter. In addition, by designing, manufacturing and providing a plurality of attachments 32 and 42, each of which can only fit on the tubes 15 and 16 in a specific diameter range, it is possible to adapt variety of kinds of the frame 4.

The battery module 21 may have exclusive special parts designed and manufactured only for a specific frame 4 and standard parts designed and manufactured in common shape for any shape of frames. In the illustrated example, exclusive parts may include the down tube attachment 32 and the seat tube attachment 42. Standard parts may include the battery unit 23, the movable holder 22c, the controller case 33, and the back plate 36. The damper mechanism 71 and the lock mechanism 72 may be provided by standard parts. A plurality of cover members 37, 38, 43, and 44 may be provided as exclusive special parts or standard parts. It is possible to use standard parts commonly for several frames 4 having different shapes. For example, standard parts can be used for several frames 4 which have different tube sizes and different tube positions. Moreover, standard parts can be used also for frames 4 of different sizes like S, M, and L.

According to this embodiment, it is possible to mount the battery assembly on the bicycle 1 with less restriction caused by shapes of frames. As a result, it is possible to improve at least one of a desirable weight distribution on the bicycle 1, easiness of mounting and demounting works, and an appearance impression of the bicycle 1.

### Second Embodiment

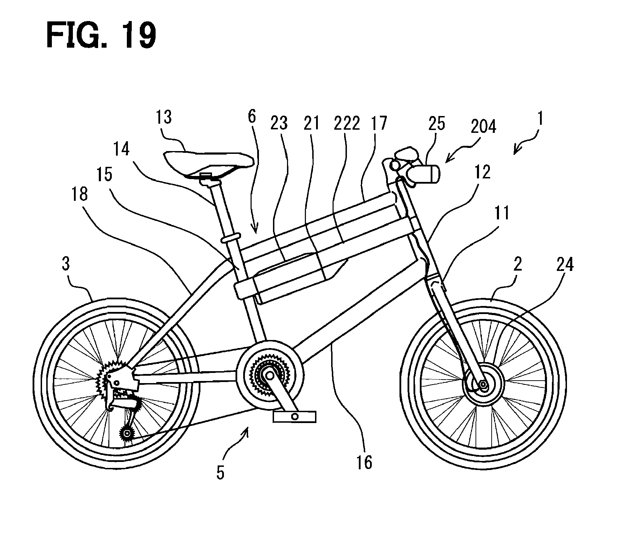

In the preceding embodiment, the bicycle 1 has the wheels 2 and 3, which are categorized in rather large diameter wheels. Alternatively, as shown in Fig. 19, the battery module 21 may be mounted on a small wheel bicycle which has rather smaller wheels. The bicycle 1 in this embodiment has wheels 2 and 3 which are rather small. A frame 204 has a head tube 12 which is comparatively long. The top tube 17 is connected with an upper part of the head tube 12. The down tube 16 is connected with a lower part of the head tube 12. The head tube 12 has a cylinder portion which is located almost the center of the head tube 12. The cylinder portion is comparatively long and is located between the connected parts.

The battery module 21 has a holder 222 joined with the center part of the head tube 12. In other words, in this embodiment, a front connecting portion is joined with the center part of the head tube 12. The holder 222 has a front attachment which has the same shape as the down tube attachment 32 in the preceding embodiment. The front attachment may also be called as a head tube attachment.

The holder 222 has a shape and length which are suitable for connecting to the head tube 12. The holder 222 has a front left cover and a front right cover which are formed in different shapes from the front left cover 37 and the front right cover 38 in the preceding embodiment. The holder 222 has a rear holder and a movable holder which are formed in the same shape as the rear holder 22b and the movable holder 22c.

The holder 222 has the same configurations as in the preceding embodiment except for configurations adapted to be joined with the head tube 12. Therefore, similar advantages in the preceding embodiment can be obtained in this embodiment.

Other Embodiments

The preferred embodiments of the present disclosure have been described. However, the present disclosure is not limited to the above embodiments, and the above embodiments may be modified in various ways without departing from the spirit and scope of the invention. The configuration of the above described embodiments is just examples. The invention in its broader terms is therefore not limited to the specific details, representative apparatus, and illustrative examples shown and described. The preferred embodiments of the present disclosure have been described. However, the present disclosure is not limited to the above embodiments, and the above embodiments may be modified in various ways without departing from the spirit and scope of the invention. The extent of the disclosure is shown by the scope of the claims, and also includes the changes, which is equal to and within the same range of the scope of the claim.

For example, a human-powered vehicle in not limited to a bicycle. A human-powered vehicle may be provided by various types, such as a mono-cycle, a tri-cycle, a four wheel vehicle, and a wheel chair. A human-powered vehicle may have a hand powering portion, which is operated by hand of a rider, instead of pedals. A human-powered vehicle may have a variety of power transmission devices, such as a belt or a shaft, instead of a chain. In the illustrated embodiments, the rotary electric machine 24 is mounted on the front wheel 2. Alternatively, the rotary electric machine 24 may be mounted as a component of the propelling mechanism 5, e.g., on a portion close to a shaft for pedals or the rear wheel 3.

In the illustrated embodiments, the bicycle 1 has the top tube 17. Alternatively, the battery module 21 may be mounted on a bicycle which has not top tube. In this case, the down tube 16 may be called as a main tube. In the illustrated embodiments, the battery module 21 is joined to the frame 4 by the attachments 32 and 42. Alternatively, the battery module 21 may be joined to the frame 4 by using holes or tabs disposed on the frame 4.

In the illustrated embodiments, the bearings 33c and 43a are disposed on the front and rear holders 22a and 22b and the shafts 51f and 51g are disposed on the basket 51. Alternatively, shafts may be disposed on the front and rear holders 22a and 22b and bearings may be disposed on the basket 51.

In the illustrated embodiments, the rotary dumper 71a is disposed on the rear-left cover 43 and the rack gear 71b is disposed on the basket 51. Alternatively, the rack gear 71b may be disposed on the rear-left cover 43 and the rotary dumper 71a may be disposed on the basket 51. In the illustrated embodiments, the dumper mechanism 71 is disposed between the rear holder 22b and the movable holder 22c. Alternatively, the dumper mechanism 71 may be disposed between the front holder 22a and the movable holder 22c.

In the illustrated embodiments, the lock mechanism 72 is disposed between the rear holder 22b and the movable holder 22c. Alternatively, the lock mechanism 72 may be disposed between the front holder 22a and the movable holder 22c. In addition, the key cylinder 72a and the bolt 72c, which are main components for the lock mechanism 72, may be disposed on the basket 51.

While the present disclosure has been described with reference to embodiments thereof, it is to be understood that the disclosure is not limited to the embodiments and constructions. The present disclosure is intended to cover various modification and equivalent arrangements. In addition, while the various combinations and configurations, are preferred, other combinations and configurations, including more, less or only a single element, are also within the spirit and scope of the present disclosure.

## Claims

1. A battery assembly for a human-powered vehicle comprising:
a holder (22) having a front connecting portion (31, 32, 37, 38) and a rear connecting portion (41, 42, 43, 44), the front connecting portion (31, 32, 37, 38) being capable of being connected with a down tube (16) or a head tube (12) of a frame (4, 204) of a human-powered vehicle (1), and the rear connecting portion (41, 42, 43, 44) being capable of being connected with a seat tube (15) of the frame, the holder being capable of being bridged between the down tube (16) or the head tube (12) and the seat tube (15); and
a battery unit (23) supported on the holder.

2. The battery assembly for a human-powered vehicle in claim 1, wherein
the holder (22, 222) and the frame (4, 204) are connected through only the front connecting portion and the rear connecting portion.

3. The battery assembly for a human-powered vehicle in claim 2, wherein
the front connecting portion (31, 32, 37, 38) is capable of being connected with an upper part of the down tube (16) or a center part of the head tube (12), and wherein
the rear connecting portion (41, 42, 43, 44) is capable of being connected with a center part of the seat tube (15).

4. The battery assembly for a human-powered vehicle in one of claims 1 to 3, wherein
the battery unit (23) has a long block shape having a longitudinal direction along and extending between the front connecting portion and the rear connecting portion.

5. The battery assembly for a human-powered vehicle in one of claims 1 to 5, wherein
the holder (22, 222) and the battery unit (23) are capable of being disposed under the top tube (17) and being disposed away from the top tube (17) of the frame (4, 204).

6. The battery assembly for a human-powered vehicle in one of claims 1 to 5, wherein
the battery unit (23) is capable of being mounted and demounted with the holder (22, 222) along a direction (PL) tilted laterally with respect to a height direction of the frame (4, 204).

7. The battery assembly for a human-powered vehicle in one of claims 1 to 6, wherein
the holder (22, 222) has a movable holder (22c, 51) which is capable of receiving the battery unit (23) and being tilted laterally with respect to a height direction of the frame (4, 204).

8. The battery assembly for a human-powered vehicle in claim 7, wherein
the holder (22, 222) has a bias member (71c) which urges the movable holder (22c, 51) toward a tilted position in which the movable holder is tilted with respect to the height direction (FH) of the frame (4, 204).

9. The battery assembly for a human-powered vehicle in claim 7 or 8, wherein
the holder (22, 222) has a damper mechanism (71) which controls a tilting speed of the movable holder (22c, 51).

10. The battery assembly for a human-powered vehicle in one of claims 7 to 9, wherein
the holder (22, 222) has a movable holder latching mechanism (51j, 72g) which latches the movable holder (22c, 51) in a closed position (CL).

11. The battery assembly for a human-powered vehicle in claim 10, wherein
the movable holder latch mechanism (51j, 72g) permits both operation of the movable holder (22c, 51) to the closed position by a user and operation of
the movable holder (22c, 51) from the closed position by a user.

12. The battery assembly for a human-powered vehicle in one of claims 7 to 11, wherein
the holder (22, 222) has a battery latch mechanism (62c, 72f) which holds the battery unit (23) in a closed position (CL).

13. The battery assembly for a human-powered vehicle in claim 12, wherein
the battery latch mechanism (62c, 72f) permits operation of the battery unit (23) to the closed position by a user, and prevents operation of the battery unit (23) from the closed position by a user.

14. The battery assembly for a human-powered vehicle in claim 13, wherein
the holder (22, 222) has a lock mechanism (72) which permits operation of the battery unit (23) from the closed position by a user by unlocking operation.

15. The battery assembly for a human-powered vehicle in one of claims 7 to 14, wherein
the movable holder (22c, 51) and the battery unit (23) a pair of electric connectors (52, 64) connectable each other, and wherein
the battery unit and the movable holder have a guide mechanism (51h, 51i, 62a, 62b) which guides relative movement of the battery unit and the movable holder along a connection direction (PL) of the connectors (52, 64).

16. The battery assembly for a human-powered vehicle in one of claims 7 to 15, wherein
the movable holder (22c, 51) is a basket (51) which has a bottom wall (51c) and a side wall (51d) which define an opening (51e) among them.

17. The battery assembly for a human-powered vehicle in one of claims 1 to 16, wherein
the battery unit (23) has a handle (63) disposed on a top of the battery unit, the handle being adjustable in a height from the top.

18. The battery assembly for a human-powered vehicle in one of claims 1 to 17, wherein
the battery unit (23) has a switch (65) and an indicator (66) which are arranged on a side area of the top.

19. The battery assembly for a human-powered vehicle in one of claims 1 to 18, wherein
the front connecting portion (31, 32, 37, 38) has a front attachment (32) which is capable of being wrapped on the down tube (16) or the head tube (12),
the rear connecting portion (41, 42, 43, 44) has a rear attachment (42) which is capable of being wrapped on the seat tube (15).

20. A human-powered vehicle comprising:
a frame (4, 204) having a seat tube (15), a down tube (16), and a head tube (12); and
the battery assembly claimed in one of claims 1 to 19, which is disposed to bridge between the down tube (16) or the head tube (12) and the seat tube (15).
